# EUROPÄISCHE PATENTSCHRIFT

(11) **EP 2 024 768 B1**
(45) Veröffentlichungstag und Bekanntmachung des Hinweises auf die Patenterteilung: **02.01.2013**
(21) Anmeldenummer: 07729214.2
(22) Anmeldetag: 16.05.2007
(51) Int. Cl.: G02B 6/122, G02B 6/13

(54) **VERFAHREN ZUR HERSTELLUNG EINES PHOTONISCHEN KRISTALLS**
METHOD FOR PRODUCING A PHOTONIC CRYSTAL
PROCÉDÉ POUR LA FABRICATION D'UN CRISTAL PHOTONIQUE

(30) Priorität: 30.05.2006 DE 102006025100
(43) Veröffentlichungstag der Anmeldung: 18.02.2009
(73) Patentinhaber: Karlsruher Institut für Technologie, 76131 Karlsruhe (DE)
(72) Erfinder: HERMATSCHWELLER, Martin, 76135 Karlsruhe (DE); VON FREYMANN, Georg, 76185 Karlsruhe (DE); WEGENER, Martin, 76227 Karlsruhe (DE); OZIN, Geoffrey Alan, Toronto Ontario M4V 1Y9 (CA)
(74) Vertreter: Fitzner, Uwe
(86) Internationale Anmeldenummer: PCT/EP2007/054766
(87) Internationale Veröffentlichungsnummer: WO 2007/137944

(56) Entgegenhaltungen:
- WO-A1-2004/063432
- US-A1- 2004 062 700
- US-A1- 2004 172 973
- N. TÉTREAULT, ET AL: "New Route to Three-Dimensional Photonic Bandgap Materials: Silicon Double Inversion of Polymer Templates" ADVANCED MATERIALS, Bd. 18, 11. Oktober 2005 (2005-10-11), Seiten 457-460, XP002449245 Weinheim in der Anmeldung erwähnt
- G.M. GRATSON ET AL: "Direct-Write Assembly of Three-Dimensional Photonic Crystals: Conversion of Polymer Scaffolds to Silicon Hollow-Woodpile Structures" ADVANCED MATERIALS, Bd. 18, 24. Januar 2006 (2006-01-24), Seiten 461-465, XP002449246 Weinheim in der Anmeldung erwähnt

## Beschreibung

Die Erfindung betrifft ein Verfahren zur Herstellung eines dreidimensionalen Photonischen Kristalls, der aus einem Material mit einem hohen Brechungsindex besteht.

Photonische Kristalle, die auf E. Yablonovitch, Phys. Rev. Lett., Band 58, Seite 2059-2062, 1987, und S. John, ebd., Seite 2486-2489, 1987, zurückgehen sind periodisch strukturierte dielektrische Materialien, die das optische Analogon von Halbleiterkristallen darstellen und so die Herstellung integrierter Photonischer Schaltkreise ermöglichen.

Photonische Kristalle können für kubisch flächenzentrierte Strukturen nach K.-M. Ho, C.T. Chan, und C.M. Soukoulis, Phys. Rev. Lett., Band 65, Seite 3152-3155, 1990, theoretisch bis zu 25 % relativ zur Mittenfrequenz aufweisen, wenn als hochbrechendes Material Silizium verwendet wird.

Insbesondere Schichtstrukturen sind gemäß K.-M. Ho, C.T. Chan, C.M. Soukoulis, R. Biswas, und M. Sigalas, Solid State Comm., Band 89, Seite 413-416, 1994, und E. Özbay et al, Phys. Rev. B, Band 50, Seite 1945-1948, 1994 über Mikrofabrikationsverfahren zugänglich. In neuerer Zeit haben S.Y. Lin et al., Nature, Band 394, Seite 251-253, 1998, S. Noda et al., Science, Band 289, Seite 604-606, 2000, und K. Aoki et al., Nature Materials, Band 2, Seite 117-121, 2003, Photonische Kristalle für infrarote Frequenzen hergestellt, indem sie planare Halbleiter-Mikrostrukturierungsverfahren für einzelne Schichten mit ausgefeilten Ausrichtungs- und Stapelungsverfahren kombiniert haben, um aus den Schichten einen dreidimensionalen Photonischen Kristall zu gestalten.

Hiermit wird eine Aufnahme von funktionalen Elementen durch gezielte Veränderungen in einzelnen Schichten möglich. Jedoch war eine Stapelung bisher nur für wenige Schichten erfolgreich, was zu einer starken Kopplung zwischen den Führungsmoden im Photonischen Kristall und den Verlustmoden im umgebenden Material führt, wodurch die Leistungsfähigkeit der funktionalen Elemente begrenzt ist.

Daher gingen M. Campbell et al., Nature, Band 404, Seite 53-56, 2000, und Y.V. Miklyaev et al., Appl. Phys. Lett., Band 82, Seite 1284-1286, 2003, dazu über, ausgedehnte dreidimensionale Photonische Kristalle hoher Qualität in Photoresistschichten mittels *holographischer Lithographie* herzustellen. Hier ist die Dicke der Photonischen Kristalle grundsätzlich nur durch die Dicke der Photoresistschicht und deren Absorption beschränkt. Die holographische Lithographie ermöglicht die Bereitstellung defektfreier Schichten mit einer Dicke von einigen 10 Einheitszellen bei einer Ausdehnung von einigen mm², wobei dieses Verfahren eine große Flexibilität im Hinblick auf den Inhalt der Einheitszelle besitzt. Allerdings erlaubt dieses Vielstrahlinterferenzverfahren nur die Herstellung strikt periodischer Strukturen.

Ein weiteres Verfahren zur Herstellung ausgedehnter dreidimensionaler Photonischer Kristalle ist die Phasenmaskenlithographie. Auch hier ist das Verfahren auf strikt periodische Strukturen beschränkt.

Daher wird ein zweites komplementäres Verfahren benötigt, um funktionale Elemente wie z. B. Wellenleiter oder Mikrohohlstrukturen in das Innere eines Photonischen Kristalls, der mit holographischer Lithographie hergestellt wurde, zu schreiben. Hierfür besonders geeignet ist das aus S. Kawata, H.-B. Sun, T. Tanaka und K. Takada, Nature, Band 412, Seite 697-698, 2001, bekannte so genannte *direkte Laserschreiben (direct laser writing,* DLW) durch Multiphotonen-Polmerisation im photosensitiven Material.

Hierbei wird ein Photoresist mittels eines Lasers belichtet, dessen Frequenz unterhalb der Einphotonen-Polymerisationsschwelle des Photoresists liegt. Wird dieser Laser auf das Innere des Photoresists fokussiert, kann die Lichtintensität innerhalb eines kleinen Volumens im Brennpunkt die Schwelle für Multiphotonen-Polmerisation überschreiten. Größe und Form dieser so genannten *Voxel* hängen von den Isointensitäts-Oberflächen, d. h. Isophoten, dem eingesetzten mikroskopischen Objektiv und der Belichtungsschwelle für Multiphotonen-Polmerisation im photosensitiven Material ab. Mit diesem Verfahren konnten S. Kawata et al. bisher Voxel mit einer Größe bis hinunter zu 120 nm bei einer Beleuchtung bei 780 nm herstellen.

In Verbindung mit holographischer Lithographie bietet das direkte Laserschreiben einen schnellen und genauen Weg um funktionale Elemente in Photonischen Kristallen bereitzustellen. Allerdings ist damit das Einbringen von Materialien mit hohem Brechungsindex in derartige Strukturen in den meisten Fällen nicht möglich, da hohe Temperaturen für die Beschichtung und hohe chemische Reaktivität der Vorläufersubstanzen für bekannte Beschichtungsverfahren wie z. B. *Chemical Vapour Deposition* (CVD) die bestehenden Strukturen zerstören. So wird die Infiltration und direkte Inversion polymerer Photonischer Kristalle mit TiO₂ über ein Atomic Layer Deposition (ALD) Verfahren bei Temperaturen von 100°C von (Infiltration and Inversion of Holographically Defined Polymer Photonic Crystal Templates by Atomic Layer Deposition Adv. Mat., DOI: 10.1002/adma.200502287) beschrieben.

Aus Gregory M. Gratson et al. Acvanced Materials 18, Seiten 461 - 465, 2006, ist es bekannt, einen polymeren Photonischen Kristall mit SiO₂ zu überziehen. Im Anschluss daran wird das Polymer komplett entfernt, bevor auf der temperaturstabilen SiO₂-Schale Si deponiert wird. Dieses Verfahren ist kein Infiltrationsverfahren; denn Si wächst sowohl auf der Außen- wie auch auf den Innenflächen der hohlen SiO₂-Röhren. Man erhält durch dieses Verfahren keine inverse Struktur. Ebenso wenig könnte man die Struktur vollständig infiltrieren, da sonst das Endergebnis ein Vollmaterial-Si-Schicht wäre, in die ein fragiles SiO₂-Hohlgerüst eingebettet wäre.

Aus N. Tetrèault et al., Advanced Materials, 18, Seiten 457 - 460, 2006, ist bekannt, das Problem der Infiltration eines polymeren Photonischen Kristalls dadurch zu umgehen, dass zunächst die Polymerstruktur vollständig in eine SiO₂-Struktur invertiert wird. Dazu wird zunächst der Photonische Kristall vollständig mit SiO₂ infiltriert und nachfolgend das Polymer entfernt. Mit diesem Verfahren ist jedoch die Darstellung inverser Strukturen mit hohem Brechungsindex nicht möglich. Vielmehr werden nur direkte Kopien des polymeren Photonischen Kristalls hergestellt.

Aus der US 2003/0106487 A1 ist es bekannt, ausgehend von einer Polymerstruktur mit sphärischen Räumen diese vollständig mit einem zweiten Material zu infiltrieren. An diesen Schritt anschließend wird entweder die Polymerstruktur entfernt, ausgedünnt oder modifiziert. Z.B. wird die Polymerstruktur nanoporös gemacht. Im Anschluss daran kann ein drittes Material in die bestehenden Hohlräume eingebracht werden. Schließlich kann noch das zweite Material entfernt werden, so dass die ursprüngliche Polymerstruktur durch das dritte Material repliziert wird. Diese Verfahrensschritte sind jedoch nicht geeignet, das Ergebnis einer Invertierung einer Polymerstruktur mit einem hochbrechenden Material zu bewirken. D.h., mit dem Verfahren gemäß der US 2003/0106487 A1 lässt sich eine inverse Struktur nicht erzielen.

In der WO 2004/063432 A1 ist ein Verfahren beschrieben, das von kolloidalen Kristallen ausgeht. Die Oberfläche der Kolloide wird mit einem Oxid ummantelt. Sodann werden die Kolloide entfernt, so dass der Oxidmantel als inverse Abformung des kolloiden Kristalls erhalten wird. In der Folge wird auf der Innenseite der inversen Abformung das hochbrechende Material abgeschieden. Schließlich wird der Oxidmantel entfernt. Dieses Verfahren ist jedoch nicht zufriedenstellend, weil es einen erheblichen Zeitaufwand bedeutet.

Weitere Maßnahmen sind aus der US 2004/0062790 A1 und WO 2004/099835 A1 bekannt. Aber auch diese arbeiten nicht zufriedenstellend, vor allem was die Problematik der Inversion angeht. Insbesondere ist es problematisch, eine Inversion eines aus einem Polymer bestehenden Photonischen Kristalls in einen Photonischen Kristall mit einem hohen Brechungsindex durchzuführen. Das Problem entsteht dadurch, dass gängige Verfahren zur Abscheidung hochbrechender Materialien (z. B. Gasphasenabscheidung-CVD) Temperaturen erfordern, die inkompatibel mit dem polymeren Ausgangsmaterial sind. Das Polymer würde über seine Glasübergangstemperatur gehoben werden und somit schmelzen, verdampfen oder auch verbrennen.

Ausgehend hiervon ist es die Aufgabe der vorliegenden Erfindung, ein Verfahren zur Herstellung eines Photonischen Kristalls, der aus einem Material mit hohem Brechungsindex besteht, vorzuschlagen, das die genannten Nachteile und Einschränkungen nicht aufweist.

Diese Aufgabe wird durch ein Verfahren gemäß Anspruch 1 zur Herstellung eines Photonischen Kristalls, der aus einem Material mit hohem Brechungsindex oder Metall besteht, gelöst, umfassend folgende Verfahrensschritte:
a) Bereitstellen einer Polymerstruktur mit vernetzten Luftporen, dessen Oberfläche leere Zwischengitterplätze aufweist,
b) Aufbringen eines homogenen, isotropen dünnen Beschichtungsmaterials auf die Oberfläche der Polymerstruktur,
c) Einbringen eines hochbrechenden Materials,
d) Öffnen eines Zugangs zum Polymer oder zum gemäß Schritt b) aufgebrachten Beschichtungsmaterial
e) Entfernen der in Schritt b) aufgebrachten Schicht,
f) Entfernung der polymeren Struktur.
wobei das Verfahren ein Einfach-Inversionsverfahren ist

Die Schritte e) und f) können in der Reihenfolge getauscht werden.

Die vorliegende Erfindung ist im Bereich der Nanotechnologie auf den Gebieten der Optik und Halbleitertechnologie angesiedelt. Zum einen kommen in der Halbleitertechnologie gängige Verfahren wie chemische Gasphasenabscheidung (CVD), Atomic Layer Deposition (ALD) und Reaktives lonenätzen (RIE) zum Einsatz. Zum anderen wird zur Herstellung der polymeren Photonischen Kristalle das aus der Optik bekannte direkte Laserschreiben verwendet.

Das erfindungsgemäße Verfahren stellt ein Einfach-Inversionsverfahren dar, bei dem durch Aufbringen einer Hilfsschicht auf den ursprünglich polymeren Photonischen Kristall das Infiltrieren dieses ummantelten Polymers mit hoher Brechzahl ermöglicht wird, was i. A. hohe Depositionstemperaturen erfordert. Nach Entfernen des Polymers und der Hilfsschicht durch geeignetes Verfahren erhält man als Endprodukt einen dreidimensionalen Photonischen Kristall mit hohem Brechungsindex. Dieser besitzt dann die inverse Struktur des ummantelten Ausgangspolymers.

Erfindungsgemäß wird für das hochbrechende Material das formgebende Polymer mit einer harten Schale, z. B. aus SiO₂ überzogen, um kompatibel für die Infiltration mit dem hochbrechenden Material zu werden. Das Polymer muss zuvor nicht entfernt werden. Dadurch wird der Prozess zur Konversion des polymeren Photonischen Kristalls in einen Photonischen Kristall bestehend aus einem Material mit hohem Brechungsindex erheblich abgekürzt. Es wird weniger SiO₂ zur partiellen Infiltration benötigt als in dem Verfahren nach N. Tetrèault et al., Advanced Materials, 18, Seiten 457 -460, 2006. Damit spart das Verfahren gegenüber diesem Stand der Technik Zeit. Des Weiteren ist kein Reaktives Ionenätzen anschließend an den Schritt der partiellen Infiltration mit dem homogenen, isotropen, dünnen Beschichtungsmaterial, z. B. SiO₂ notwendig.

Der erfindungsgemäße Prozess zur Konversion des polymeren Photonischen Kristalls in einem Photonischen Kristall bestehend aus einem Material mit hohem Brechungsindex besitzt demgemäß den Vorteil der Zeit- und Materialersparnis. Des Weiteren hat das Verfahren den Vorteil, dass inverse Strukturen der formgebenden Polymerstruktur in einem hochbrechenden Material repliziert werden. Dadurch können größere Photonische Bandlücken erzielt werden. Gegenüber dem Verfahren von N. Tetréault et al., Advanced Materials 18, S. 457-460 (2006), hat dieses Verfahren zudem den Vorteil, dass keine Substratwechsel mehr notwendig ist. Die Probe wird vom Templat bis zur inversen Struktur bestehend aus einem hochbrechenden Material auf einem Substrat prozessiert.

Der Ausgangspunkt des erfindungsgemäßen Verfahrens ist ein gemäß Verfahrensschritt a) bereitgestellter dreidimensionaler Photonischer Kristall, der aus einem Polymer besteht. Hierzu wird gemäß dem bekannten Stand der Technik vorzugsweise ein Polymer oder ein polymerisierbares Monomer mittels Spincoating auf ein erstes Substrat aus Glas, Silizium oder einem Polymer aufgebracht. Auch andere Substrate bzw. das Aufbringen des Polymers oder polymeren Monomers auf die genannten Substrate sind prinzipiell möglich, welche jedoch mit Adhäsionspromotern oder z.B. dünnen, HF-resistenten Materialien (derzeit in Verwendung für die Inversion) überzogen sind. Damit würde z.B. das Glassubstrat bei Verwendung von HF nicht angegriffen werden.

Anschließend wird aus dem Polymer vorzugsweise mittels holographischer Lithographie, Phasenmaskenlithographie oder direktem Laserschreiben oder einer Kombination beider Verfahren ein polymerer Photonischer Kristall mit der gewünschten Kristallstruktur hergestellt. Ein derartiger Photonischer Kristall besitzt eine Oberfläche, durch die ein Gitter mit leeren Zwischengitterplätzen definiert ist. Die Porengrößen liegen vorzugsweise bei 5 nm bis 10 µm.

Der polymere Photonische Kristall wird zunächst mit einer isotropen, dünnen Beschichtung versehen. Diese besteht aus einem für die folgende Infiltration temperaturbeständigen und/oder chemisch beständigen Material. Das Polymer ist nach Abschluss der Beschichtung vollständig durch die isotrope, dünne Beschichtung eingefasst. Die resultierende Struktur besitzt nach wie vor vollständig vernetzte Luftporen, wird also nur partiell infiltriert. Die aufgebrachte Beschichtung macht die Polymerstruktur kompatibel mit dem ansonsten inkompatiblen nachfolgenden Infiltrationsschritt. Inkompatibiliäten können nämlich z. B. durch Temperaturunbeständigkeit, mangelnde chemische Beständigkeit und schlechtes Wachstum auf der Oberfläche des Polymers bedingt sein. Gleichzeitig ist die erste Beschichtung kompatibel mit dem Polymer.

Erfindungsgemäß sind für die isotope, dünne Beschichtung Oxide wie Al₂O₃, MgO, TiO₂, ZrO₂, HfO₂ und SiO₂ einsetzbar. Des weiteren können als solche Schicht auch Nitride wie BN, TiN, Si₃ N₄m C₄, AIN, Carbide, sowie nicht-stöchiometrische Verbindungen aus Metallen und Oxiden, z. B. ZnO_{0,99}, WO₃₋ₓ, TiO₂₋ₓ,sowie Metalle als solche, z. B. Ni, Co, Mo, Cr, W dienen.

In einer bevorzugten Ausgestaltung wird Siliziumdioxid (SiO₂) auf dem polymeren Photonischen Kristall aufgebracht. Dies kann beispielsweise durch Benetzung der Polymer-Oberfläche mit Wasser (H₂O) und anschließender Reaktion der dünnen Wasserschicht mit Siliziumtetrachlorid (SiCl₄) zu amorphem SiO₂ unter Freisetzung des gasförmigen Nebenproduktes Salzsäure (HCl) erreicht werden.

Der polymere Photonische Kristall ist nach Abschluss dieses Verfahrensschritts mit einer festen Schale der genannten Materialien versehen, vorzugsweise mit einer festen Schale aus amorphem SiO₂. Diese Schicht ist kompatibel mit dem Prozess der chemischen Gasphasenabscheidung (CVD) zur Infiltration der Struktur mit einem hochbrechenden Material, welches vorzugsweise aus Silizium besteht. Die Gründe für die Kompatibilität sind:
1. Die Temperaturbeständigkeit, d. h. während des CVD-Prozesses wird die Glasübergangstemperatur von SiO₂ nicht überschritten. Somit bleibt die harte Schale formstabil und verhindert zudem die Deformation des eingeschlossenen Polymers.
2. Die chemische Kompatibilität, d. h., das Silizium wächst nicht auf jedem Substrat homogen. Es muss das Vorläufermaterial (Precursor) auf der Oberfläche ad- und desorbieren können. In der erfindungsgemäß bevorzugten Variante findet ein homogenes, isotropes Wachstum von amorphem, hydrogenisiertem Si (a-Si: H) auf der Oberfläche des amorphen SiO₂ statt.

Der dreidimensionale vorzugsweise mit SiO₂ ummantelte polymere Photonische Kristall wird mit einem Material hoher Brechzahl infiltriert. Hierfür kommen alle dem Fachmann bekannten hochbrechende Materialen in Betracht, z.B. auch Metalle. Beispielsweise weisen metallische Photonische Kristalle geeignete Eigenschaften auf. Als Material mit hohem Brechungsindex werden bevorzugt die Halbleiter Silizium, auch mit verschiedenen n- oder p-Dotanten versehen, Germanium oder eine SiₓGe₁₋ₓ-Legierung eingesetzt. Das Silizium selbst kann amorph, nanokristallin, polykristallin oder monokristallin sein, wobei hydriertes nanokristallines Silizium (nc-Si:H) ein besonders bevorzugtes Material darstellt. Darüber hinaus sind II-V-, II-VI-, I-VII-, IV-VI-Halbleiter einschließlich ihrer n-oder p-dotierten Varianten oder Metalle mit hohem Brechungsindex wie z. B. Silber (Ag), Gold (Au), Wolfram (W), Iridium (Ir) oder Tantal (Ta) ebenso geeignet.

Als Infiltrationsverfahren wird erfindungsgemäß bevorzugt die Abscheidung aus der Gasphase (CVD = Chemical Vaper Deposition) verwendet. Als gasförmiges Ausgangsmaterial kann eine Vorläufersubstanz (Precursor) eingesetzt werden. Im Falle der Abscheidung von Si ist z. B. SiH₄ oder Si₂H₆ ein geeigneter Precursor. Der Photonische Kristall wird hierzu beheizt. Hierfür kann der Kristall auf einem widerstandsgeheiztem Heizelement in einem Kaltwandreaktor angeordnet sein.

Die eingesetzten Heizelemente werden langsam erhitzt. Vorzugsweise wird auch eine Temperatur von 100 bis 800°C, bevorzugt 200 bis 800° C geheizt. Der Betriebsdruck beträgt 0,001 mbar bis zu mehreren 100 mbar, bevorzugt 1-50 mbar.

Aufgrund der dreidimensionalen Vernetzung der Poren kann der Precursor sich an allen freien Oberflächen des Photonischen Kristalls absetzen und Silizium abscheiden. Bei einer Depositionsrate von beispielsweise ca. 5 bis 7 nm pro Minute (bei 470°C, 5 mbar, 1 sccm Si₂H₆), kann die CVD-Anlage so lange betrieben werden, bis der Photonische Kristall vollständig infiltriert ist. Infolge räumlich variierender Durchmesser der Zugangskanäle können kleine Hohlräume zurückbleiben, da diese zum Zeitpunkt "vollständiger Infiltration" vom weiteren Zustrom durch das Precursor-Gas abgeschnitten werden.

Um einen möglichst hohen Brechungsindex-Kontrast zu erzielen, müssen das polymere Ausgangsmaterial und das Hilfsmaterial, z. B. SiO₂ aus der Struktur entfernt werden. Da diese beiden Materialen aber vollständig ummantelt sind, in der erfindungsgemäß bevorzugten Ausführungsform mit Si, ist ein chemisches oder thermisches Entfernen nicht möglich. Deswegen wird insbesondere im Falle der vollständigen Infiltration mit Si vorzugsweise mittels Reaktivem Ionenätzen (RIE) ein Zugang zur homogenen, isotropen, dünnen Schicht oder bis zum formgebenden Polymer geöffnet. Als Ätzgase können z. B. Chloride, Fluoride und auch Zusätze von O₂ dienen. Auch nasschemisches Ätzen sowie isotropes Plasmaätzen sind Alternativen.

Im Falle der Beschichtung mit amorphem SiO₂ kann diese Beschichtung aus der Struktur vorzugsweise durch nasschemisches Ätzen, z. B. mittels 1%iger wässriger Flusssäure entfernt werden. Hierdurch werden das Polymer und das Si nicht angegriffen. Außer Flusssäure können beispielsweise auch starke Laugen wie konzentrierte wässrige KOH für Oxide zum Einsatz kommen. Im Fall der Nitride und Metalel ist z. B. Salpetersäure eine geeignete Säure zu deren Entfernung. Sofern anstelle von SiO₂ andere Oxide, beispielsweise Al₂O₃, MgO, TiO₂, ZrO₂, HfO₂ zum Einsatz kommen, kann beispielsweise Salzsäure verwendet werden.

Die Säuren wirken etwa einige Sekunden bis zu mehreren Stunden ein. Im Falle der Beschichtung mit amorphem SiO₂ beträgt die Einwirkzeit etwa 1 - 30 Minuten.

Im Anschluss an den Ablauf der Einwirkdauer wird gespült. Hierfür wird vorzugsweise bidestilliertes Wasser verwendet. Darauf folgt ein kurzer Trocknungsprozess und ein erneutes Ätzen. Die Zeitdauer für das erneute Ätzen beträgt 1 - 30 Minuten.

Im Falle des Einsatzes von SiO₂ beträgt die Ätzdauer ebenfalls 1-30 Minuten.

Aus der resultierenden Polymer-Kompositstruktur, vorzugsweise Polymer/Si-Kompositstruktur, wird anschließend das formgebende Polymer entfernt. Vorzugsweise wird hierbei eine thermische Zersetzung durchgeführt. D. h., z. B. wird die Polymer/Kompositstruktur zur Entfernung des Polymers in einen Ofen gegeben, welcher auf 200 - 800° C, bevorzugt 350-600°C beheizt ist. Vorzugsweise wird die Probe für mehrere Stunden, besonders bevorzugt für 10 Sekunden beheizt.

Außer der thermischen Zersetzung kommen auch andere geeignete Verfahren zur Entfernung des formgebenden Polymers in Betracht. Beispielsweise können Plasmaverfahren eingesetzt werden (z. B. Luft- oder Sauerstoffplasma). Ebenso sind nasschemische Verfahren geeignet.

Das entstandene Endprodukt ist ein dreidimensionaler Photonischer Kristall aus hochbrechendem Material (vorzugsweise Si), d.h. bevorzugt mit einem Brechungsindex von n>2.3. Dieser weist die inverse Struktur des ummantelten dreidimensionalen polymeren Photonischen Kristalls auf. Das Entfernen des formgebenden Polymers bewirkt mithin die Ausbildung des gewünschten gewünschten dreidimensionalen Photonischen Kristalls aus Material mit hohem Brechungsindex, dessen Struktur invers ist zu dem nach Verfahrensschritt b) mit der Hilfsschicht ummantelten Polymers. Das Kristallgitter des so erhaltenen Photonischen Kristalls kann beispielsweise eine kubisch flächenzentrierte (fcc), eine einfach-kubische (*sc*), eine *slanted pores-,* eine Diamant- oder eine quadratische Spiral-Struktur aufweisen.

Das erfindungsgemäße Verfahren ermöglicht die Herstellung von dreidimensionalen Photonischen Kristallen mit hohem dielektrischem Kontrast. Diese können sämtliche Strukturen und Topologien aufweisen, die sich mittels holographischer Lithographie, Phasenmaskenlithographie, direktem Laserschreiben oder einer Kombination beider Verfahren herstellen lassen. Damit lassen sich funktionale Strukturen in dreidimensionalen Photonischen Kristallen ohne weitere Verfahrensschritte herstellen. Das bereitgestellte erfindungsgemäße Verfahren ermöglicht die Herstellung von dreidimensionalen Photonischen Kristallen, die bei geeigneten Strukturen vollständige Photonische Bandlücken ausbilden können.

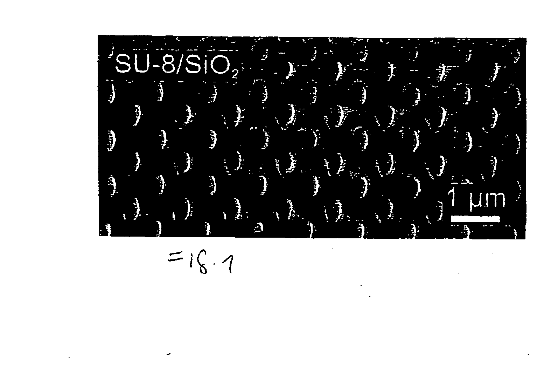

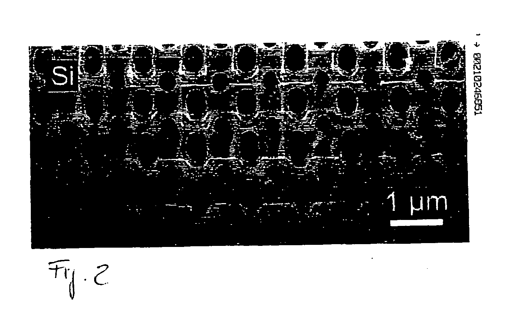

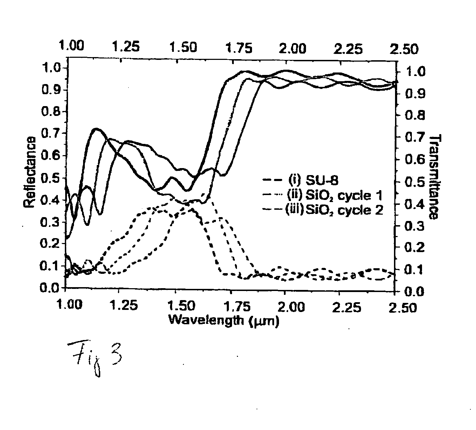

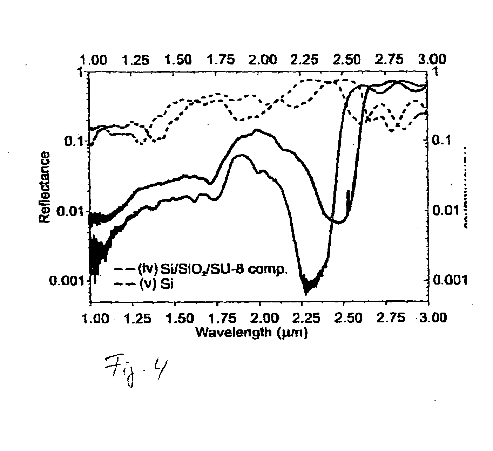

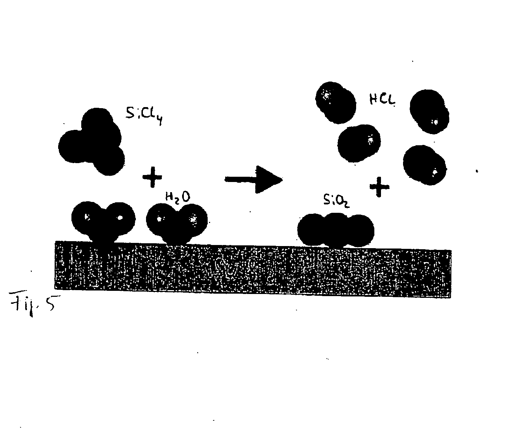

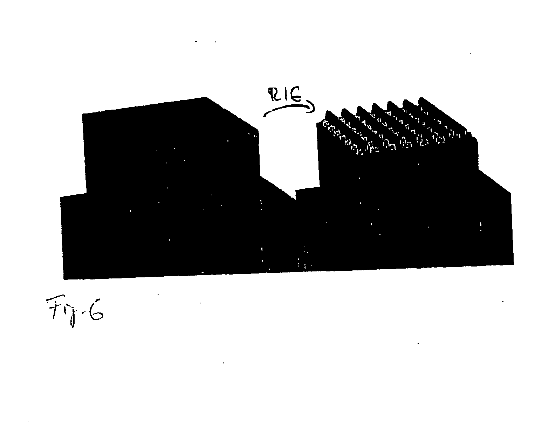

Die Erfindung wird im Folgenden anhand von Ausführungsbeispielen und den Figuren näher erläutert. Es zeigen:
**Fig. 1****:**
   Es ist ein Schnitt durch einen SiO2 ummantelten polymeren Photonischen Kristall, durchgeführt mit einem Fokussierten Ionenstrahl (FIB) dargestellt. Die Probe wurde unter denselben Bedingungen hochgeheizt, die für die Infiltration mit Si eingesetzt wurden. Dabei wurde in drei Stunden eine Rampe von Raumtemperatur auf 470°C gefahren. Diese Temperatur wurde zwei Stunden lang gehalten, bevor wieder eine Rampe innerhalb von zwei Stunden auf Raumtemperatur gefahren wurde. Man erkennt, dass nach wie vor das Polymer in die feste SiO₂-Hülle eingeschlossen ist und dabei die Form erhalten geblieben ist.
**Fig. 2****:**
   Es ist ein Schnitt mit einer FIB-Anlage durch einen Silizium-einfach-invertierten Photonischen Kristall dargestellt. Man erhält die inverse Struktur der in Fig. 1 dargestellten Form.
**Fig. 3** **und** **4****:**
   Hier sind optische Messungen an einem nach der beschriebenen Methode Silizium-einfach-invertierten Photonischen Kristall der Woodpile-Struktur dargestellt. Die Gitterkonstante beträgt c = √2 x 800 nm. Die Messungen wurden an ein einem Fourier-Transform-Infrarotspektrometer vorgenommen (FTIR). Im Folgenden wird der beschriebene Prozess in den jeweiligen beschriebenen Schritten optisch dokumentiert:
      (i) Ausgangsmaterial ist der polymere Woodpile aus SU-8 (Dies ist die Produktbezeichnung eines negativen Photoresists von der Firma MicroChem. Dieser Resist besteht aus einem Epoxidharz SU-8, der in Gammabutyrolacton (GBL) gelöst ist und mit einem Photosäuregenerator aus Triarylsulfonium Salz in Propylen Carbonat versetzt ist).
      (i) SU-8 Woodpile beschichtet mit SiO₂ nach 1 ALD-Zyklus
      (iii) SU-8 Woodpile beschichtet mit SiO₂ nach 2 ALD-Zyklen
      (iv) Si-infiltrierte Struktur, somit also ein Kompositstruktur aus SU-8, SiO₂ und Si
      (v) Si-einfach-invertierter Woodpile nach Entfernung des amorphen Siliziumdioxids sowie des Polymers SU-8.

   Es wird eine vollständige Bandlücke bei ca. 2,3 µm Wellenlänge erhalten.
**Fig. 5****:**
   Es ist eine Veranschaulichung des ALD-Mechanismus dargestellt. SiCl₄-Gas reagiert mit dem am Polymer SU-8 adsorbierten Wasser. Dabei bildet sich amorphes Silizumdioxid unter Freisetzung von Salzsäure.
**Fig. 6****:**
   Um das Polymer und das Siliziumdioxid aus dem Si-infiltrierten Woodpile entfernen zu können, werden zunächst Zugänge zum SiO₂ bzw. zum formgebenden Polymer geschaffen. Dies erfolgt in dem erfindungsgemäßen Beispiel durch Reaktives Ionen ätzen.
**Fig. 7****:**

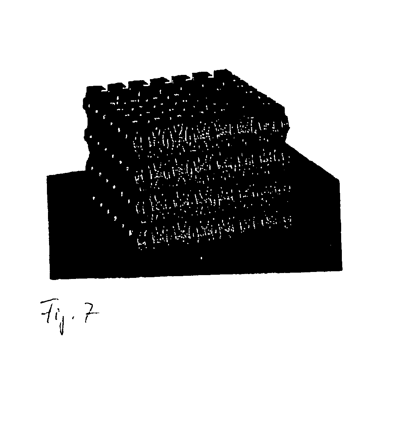

   In Fig. 7 ist die Simulation eines Si-einfach invertiertem Woodpile dargestellt.

## Patentansprüche

1. Verfahren zur Herstellung eines Photonischen Kristalls, der aus einem Material mit hohem Brechungsindex oder Metall besteht, umfassend die folgenden Verfahrensschritte in der folgenden Reihenfolge:
a) Bereitstellen einer Polymerstruktur mit vernetzten Luftporen, dessen Oberfläche leere Zwischengitterplätze aufweist,
b) Aufbringen eines homogenen, isotropen dünnen Beschichtungsmaterials auf die Oberfläche der Polymerstruktur,
c) Einbringen eines hochbrechenden Materials,
d) Öffnen eines Zugangs zum Polymer oder zum gemäß Schritt b) aufgebrachten Beschichtungsmaterial
e) Entfernen der in Schritt b) aufgebrachten Schicht,
f) Entfernung der polymeren Struktur,
wobei das Verfahren ein Einfach-Inversionsverfahren ist.

2. Verfahren nach Anspruch 1, **dadurch gekennzeichnet, dass** Schritt f) vor Schritt e) durchgeführt wird.

3. Verfahren nach einem der vorhergehenden Ansprüche, **dadurch gekennzeichnet, dass** das isotrope, dünne Beschichtungsmaterial temperaturbeständig und/oder chemisch beständig ist.

4. Verfahren nach einem der vorhergehenden Ansprüche, **dadurch gekennzeichnet, dass** in Schritt b) Metalle, Oxide, Nitride, Carbide oder nicht-stöchiometrische Verbindungen aus Metallen und Oxiden eingesetzt werden, wobei
als Oxide b) bevorzugt Al₂O₃, MgO, TiO₂, ZrO₂, HfO₂ oder SiO₂,
als Metalle b) bevorzugt Ni, Co, Cr oder W eingesetzt werden.
als Nitride b) bevorzugt BN, TiN, Si₃N₄, C₃N₄ oder AIN eingesetzt werden.

5. Verfahren nach einem der vorhergehenden Ansprüche **dadurch gekennzeichnet, dass** als Verbindungen aus Metallen und Oxiden ZnO_{0,99}, WO₃₋ₓ, TiO₂₋ₓ eingesetzt werden.

6. Verfahren nach einem der vorhergehenden Ansprüche **dadurch gekennzeichnet, dass** die Oberfläche der Polymerstruktur mit Wasser benetzt wird und anschließend Siliziumtetrachlorid in einer derartigen Menge aufgebracht wird, dass eine Ummantelung der Polymerstruktur mit amorphem SiO₂ entsteht.

7. Verfahren nach einem der vorhergehenden Ansprüche **dadurch gekennzeichnet, dass** im Schritt c) als hochbrechendes Material eine Si, Ge oder SiₓGe₁₋ₓ-Legierung aufgebracht wird.

8. Verfahren nach Anspruch 7, **dadurch gekennzeichnet, dass** zur Beschichtung Disilan (Si₂H₆) oder Silan (SiH₄) eingesetzt wird.

9. Verfahren nach einem der Ansprüche 7 oder 8, **dadurch gekennzeichnet, dass** das Si bei einer Temperatur von 200° bis 800°C aufgebracht wird.

10. Verfahren nach einem der Ansprüche 7 bis 9, **dadurch gekennzeichnet, dass** die Beschichtung bei einem Druck von 0,001 mbar bis zu mehreren 100 mbar durchgeführt wird.

11. Verfahren nach einem der vorhergehenden Ansprüche, **dadurch gekennzeichnet, dass** nach Schritt c) ein Reaktives Ionen-Ätzen oder Plasmaätzen durchgeführt wird.

12. Verfahren nach einem der vorhergehenden Ansprüche, **dadurch gekennzeichnet, dass** die in Schritt b) aufgebrachte Schicht durch nasschemisches Ätzen, bevorzugt mittels Flusssäure, entfernt wird.

13. Verfahren nach einem der vorhergehenden Ansprüche, **dadurch gekennzeichnet, dass** das Polymer mittels thermischer Zersetzung, durch Einsatz von Plasmen oder durch nasschemische Verfahren entfernt wird.

14. Verfahren nach Anspruch 13, **dadurch gekennzeichnet, dass** die beschichtete Polymerstruktur auf 200 - 800°C beheizt wird.

15. Verfahren nach Anspruch 14 mit hydriertem nanokristallinen Silizium (nc-Si:H) als Material mit hohem Brechungsindex.

## Claims

1. Process for producing a photonic crystal which consists of a material of high refractive index or metal, comprising the following process steps in the following sequence:
a) providing a polymer structure with crosslinked air pores, whose surface has empty interstitial sites,
b) applying a homogeneous, isotropic, thin coating material to the surface of the polymer structure,
c) introducing a high-index material,
d) opening up a route to the polymer or to the coating material applied in step b),
e) removing the layer applied in step b),
f) removing the polymeric structure,
the process being a single inversion process.

2. Process according to Claim 1, **characterized in that** step f) is performed before step e).

3. Process according to either of the preceding claims, **characterized in that** the isotropic, thin coating material is thermally stable and/or chemically resistant.

4. Process according to any one of the preceding claims, **characterized in that**, in step b), metals, oxides, nitrides, carbides or nonstoichiometric compounds composed of metals and oxides are used,
the oxides b) used preferably being Al₂O₃, MgO, TiO₂, ZrO₂, HfO₂ or SiO₂,
the metals b) used preferably being Ni, Co, Cr or W, and
the nitrides b) used preferably being BN, TiN, Si₃N₄, C₃N₄ or AlN.

5. Process according to any one of the preceding claims, **characterized in that** the compounds composed of metals and oxides used are ZnO_{0.99}, WO₃₋ₓ, TiO₂₋ₓ.

6. Process according to any one of the preceding claims, **characterized in that** the surface of the polymer structure is wetted with water and then silicon tetrachloride is applied in such an amount as to give rise to sheathing of the polymer structure with amorphous SiO₂.

7. Process according to any one of the preceding claims, **characterized in that** the high-index material applied in step c) is an Si, Ge or SiₓGe₁₋ₓ alloy.

8. Process according to Claim 7, **characterized in that** disilane (Si₂H₆) or silane (SiH₄) is used for the coating.

9. Process according to either of Claims 7 and 8, **characterized in that** the Si is applied at a temperature of from 200 to 800°C.

10. Process according to any one of Claims 7 to 9, **characterized in that** the coating is performed at a pressure of from 0.001 mbar up to several 100 mbar.

11. Process according to any one of the preceding claims, **characterized in that** step c) is followed by performance of reactive ion etching or plasma etching.

12. Process according to any one of the preceding claims, **characterized in that** the layer applied in step b) is removed by wet chemical etching, preferably by means of hydrofluoric acid.

13. Process according to any one of the preceding claims, **characterized in that** the polymer is removed by means of thermal decomposition, by using plasmas or by wet chemical processes.

14. Process according to Claim 13, **characterized in that** the coated polymer structure is heated to 200-800°C.

15. Process according to Claim 14 with hydrogenated nanocrystalline silicon (nc-Si:H) as the material of high refractive index.

## Revendications

1. Procédé de fabrication d'un cristal photonique, qui est constitué d'un matériau ayant un indice de réfraction élevé ou d'un métal, comprenant les étapes de procédé suivantes dans l'ordre suivant :
a) la préparation d'une structure polymère comprenant des pores d'air réticulés, dont la surface comprend des espaces de réseau vide,
b) l'application d'un matériau de revêtement homogène isotrope mince sur la surface de la structure polymère,
c) l'introduction d'un matériau hautement réfractant,
d) l'ouverture d'un accès au polymère ou au matériau de revêtement appliqué selon l'étape b),
e) l'élimination de la couche appliquée à l'étape b),
f) l'élimination de la structure polymère,
le procédé étant un procédé d'inversion simple.

2. Procédé selon la revendication 1, **caractérisé en ce que** l'étape f) est réalisée avant l'étape e).

3. Procédé selon l'une quelconque des revendications précédentes, **caractérisé en ce que** le matériau de revêtement isotrope mince est résistant à la température et/ou résistant aux produits chimiques.

4. Procédé selon l'une quelconque des revendications précédentes, **caractérisé en ce qu'**à l'étape b), des métaux, des oxydes, des nitrures, des carbures ou des composés non stoechiométriques constitués de métaux et d'oxydes sont utilisés,
Al₂O₃, MgO, TiO₂, ZrO₂, HfO₂ ou SiO₂ étant utilisés de préférence en tant qu'oxydes b),
Ni, Co, Cr ou W étant utilisés de préférence en tant que métaux b),
BN, TiN, Si₃N₄, C₃N₄ ou AIN étant utilisés de préférence en tant que nitrures b).

5. Procédé selon l'une quelconque des revendications précédentes, **caractérisé en ce que** ZnO_{0,99}, WO₃₋ₓ, TiO₂₋ₓ sont utilisés en tant que composés constitués de métaux et d'oxydes.

6. Procédé selon l'une quelconque des revendications précédentes, **caractérisé en ce que** la surface de la structure polymère est mouillée avec de l'eau, puis du tétrachlorure de silicium est appliqué en une quantité telle qu'un enrobage de la structure polymère avec du SiO₂ amorphe soit formé.

7. Procédé selon l'une quelconque des revendications précédentes, **caractérisé en ce qu'**à l'étape c), un alliage de Si, Ge ou SiₓGe₁₋ₓ est appliqué en tant que matériau hautement réfractant.

8. Procédé selon la revendication 7, **caractérisé en ce que** le disilane (Si₂H₆) ou le silane (SiH₄) est utilisé pour le revêtement.

9. Procédé selon l'une quelconque des revendications 7 ou 8, **caractérisé en ce que** le Si est appliqué à une température de 200 °C à 800 °C.

10. Procédé selon l'une quelconque des revendications 7 à 9, **caractérisé en ce que** le revêtement est réalisé à une pression de 0,001 mbar à plusieurs 100 mbar.

11. Procédé selon l'une quelconque des revendications précédentes, **caractérisé en ce qu'**après l'étape c), une gravure ionique réactive ou une gravure plasma est réalisée.

12. Procédé selon l'une quelconque des revendications précédentes, **caractérisé en ce que** la couche appliquée à l'étape b) est éliminée par gravure chimique humide, de préférence par de l'acide fluorhydrique.

13. Procédé selon l'une quelconque des revendications précédentes, **caractérisé en ce que** le polymère est éliminé par décomposition thermique, par utilisation de plasmas ou par des procédés chimiques humides.

14. Procédé selon la revendication 13, **caractérisé en ce que** la structure polymère revêtue est portée à une température de 200 à 800 °C.

15. Procédé selon la revendication 14, avec du silicium nanocristallin hydrogéné (nc-Si:H) en tant que matériau ayant un indice de réfraction élevé.
